Europäisches Patentamt

European Patent Office

Office européen des brevets

(11) Publication number: **0 257 711**
A1

## EUROPEAN PATENT APPLICATION

(21) Application number: 87201572.2

(22) Date of filing: 20.08.87

(51) Int. Cl.⁴: **A01B 29/04** , A01B 49/02

(30) Priority: 21.08.86 NL 8602124

(43) Date of publication of application:
02.03.88 Bulletin 88/09

(84) Designated Contracting States:
DE FR GB NL

(71) Applicant: **C. van der Lely N.V.**
**Weverskade 10 P.O. Box 26**
**NL-3155 ZG Maasland(NL)**

(72) Inventor: **van der Lely, Cornelis**
**7 Brüschenrain**
**Zug(CH)**

(74) Representative: **Mulder, Herman et al**
**Octrooibureau Van der Lely N.V. Weverskade**
**10 P.O. Box 26**
**NL-3155 ZG Maasland(NL)**

(54) **A soil cultivating machine.**

(57) The invention relates to a soil cultivating machine having a frame and a roller assembly (15, 22, 33, 36) for cultivating the soil. The roller assembly (15, 22, 33, 36) includes a tubular part (17) provided at its periphery with a movable element (21, 26, 35, 37). The said element has a peripheral surface that is larger than the peripheral surface of the tubular part (17). The roller assembly has two tubular parts (17), about which the said movable element (21, 26) is provided. The tubular parts (17) are freely rotatable and the axes of rotation extend at least substantially parallel to each other. The said movable element (21, 26, 35) is in the form of a flexible wall, which comprises a plurality of belts (18, 23, 34) which extend at least substantially parallel to a vertical plane in the direction of operative travel of the machine. The said belts are spaced apart and are interconnected by means of rod-shaped portions (19, 19A).

FIG. 2

# A SOIL CULTIVATING MACHINE

The invention relates to a soil cultivating machine having a frame and roller assembly for cultivating the soil.

With soil cultivating machines of this type the roller assembly usually includes a so-called packer roller provided with scraper elements, which render the whole comparatively heavy, and which, in particular when the machine is combined with a further implement such as a seed drill or planter, may result in an impermissible load on the lifting hitch of a tractor.

Using the construction according to the invention, freshly cultivated soil can now be effectively prevented from sticking to the roller assembly without the weight of the whole becoming unacceptably high for this construction.

According to the invention, this is accomplished in that the roller assembly includes a tubular part provided at its periphery with a movable element, the said element having a peripheral surface that is larger than the peripheral surface of the tubular part. With the aid of this provision it is possible, during operation, to obtain a continuous movement relative to each other of the roller assembly members which are in contact with the soil, whereby a sticking of earth is prevented. When this provision according to the invention is used, the weight of the whole can be lower than for the conventional constructions.

A further feature of the invention relates to a provision in a soil cultivating machine of the above-defined type, wherein the roller assembly includes at least one tubular part and there is provided a flexible wall which encloses said tubular part with some clearance.

Using this construction. the relative movement of the elements forming part of the roller assembly and being in contact with the soil during operation can be highly stimulated, which still further reduces the risk of earth sticking thereto.

A still further feature of the invention concerns a soil cultivating machine having a roller assembly which cultivates the soil and includes at least one tubular part, about which a cage-like portion is arranged with clearance, which portion comprises a plurality of elongate elements made of plate material. The use of cage-like portions provides, during operation, a vigorously moving roller periphery, whereby a sticking of earth can be prevented, while the plate material used for the elongate elements allows of a light construction.

For a better understanding of the invention and to show how the same may be carried into effect, reference will now be made, by way of example, to the accompanying drawings, in which:

Figure 1 is a plan view of a soil cultivating machine provided with a roller assembly according to the invention;

Figure 2 is, to an enlarged scale, a side view taken in the direction of the arrow II in Figure 1:

Figure 3 is, to an enlarged scale, a side view taken on the line III-III in Figure 1;

Figure 4 is a view taken in the direction of the arrow IV in Figure 3;

Figure 5 is, to an enlarged scale, a view taken on the line V-V in Figure 3;

Figure 6 is a side view taken on the line III-III in Figure 1 of a second embodiment of a roller assembly according to the invention;

Figure 7 is a view taken in the direction of the arrow VII in Figure 6;

Figure 8 is a side view in accordance with Figures 3 and 6 of a third embodiment of a roller assembly according to the invention;

Figure 9 is a view taken in the direction of the arrow IX in Figure 8;

Figure 10 is a side view in accordance with Figure 8 of a fourth embodiment of a construction according to the invention, and

Figure 11 is a view taken in the direction of the arrow XI in Figure 10.

The implement shown in the drawings concerns a soil cultivating machine, in particular one for preparing a seed bed.

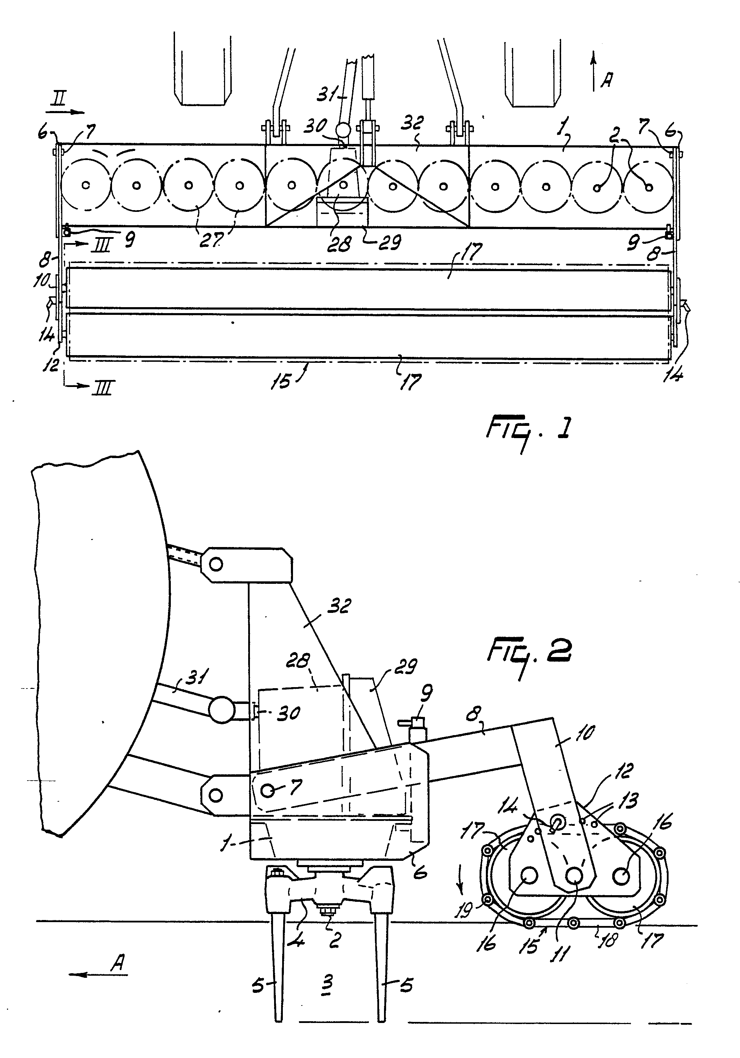

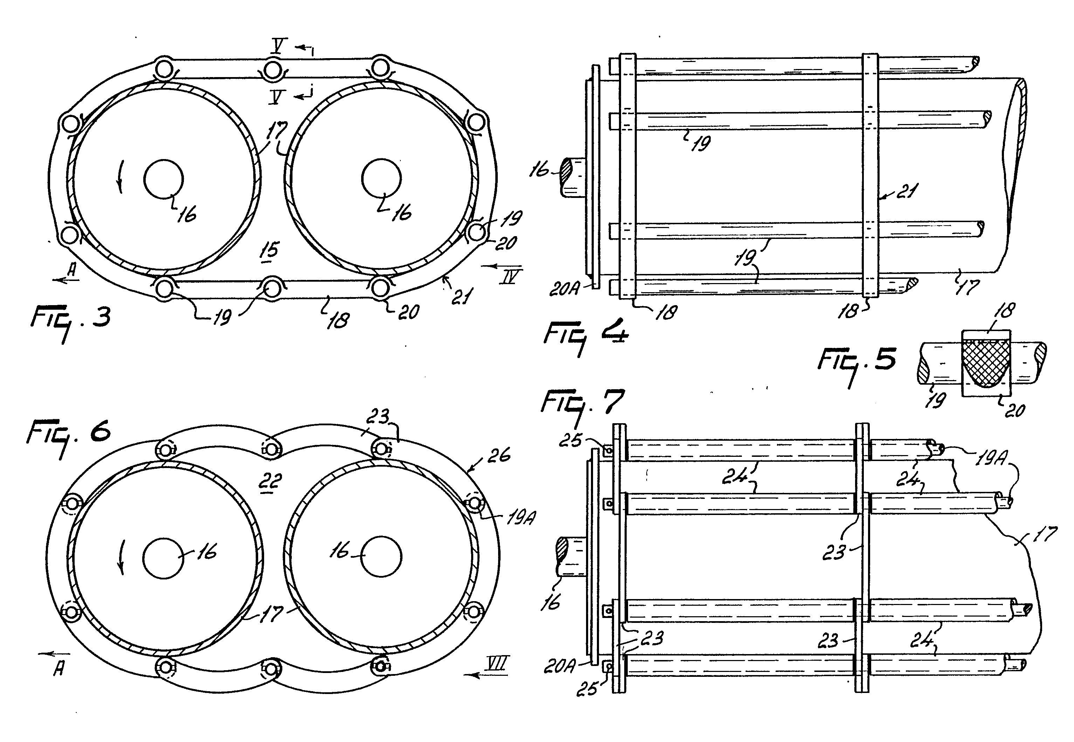

The machine comprises a box-like frame portion 1 which extends transversely to the direction of operative travel A. In the frame portion 1 are supported, spaced apart equidistantly by preferably 25 cms, the upwardly, preferably at least substantially vertically extending shafts 2 of soil working members 3. Each of the soil working members 3 includes a carrier 4 which is mounted on the end of a shaft 2 that projects from the bottom of the frame portion 1 and extends at least substantially horizontally. Near its ends, each carrier 4 is provided with soil working elements 5 which extend downwardly and are afforded by tines. The ends of the box-like frame portion 1 are closed by means of plates 6 which extend at least substantially parallel to a vertical plane in the direction of operative travel A. Each of the plates 6 has near its front end a bolt 7 which extends transversely to the direction of operative travel A. An arm 8 is pivotal about each bolt 7, said arm extending rearwardly along the inner side of each plate 6. Near the rear side of the frame portion 1, an adjusting device 9 is present for each arm 8, which adjusting device in this case is constituted by a threaded spindle, by means of which an arm 8 can pivot in height about the bolt 7 and can be locked in a plurality of positions. At its rear end, each arm 8 has a support 10 which extends at a square angle to the arm and is directed downwardly. Near its lower end, each support 10 includes a pin 11, about which a plate-shaped carrier 12 is freely pivotal at the inner side. As will be apparent from the drawing, the plate-shaped carrier 12 is substantially triangular with rounded corners, the base being located at least substantially horizontally. The upper side of the plate-shaped carrier 12 is provided with a plurality of adjacent apertures 13 located on an arc of a circle having its centre on the longitudinal centre line of the pin 11. Each of the supports 10 has an aperture through which a spring-loaded pin 14 can be inserted, which pin can also be inserted through one of the apertures 13 in the plate-shaped carrier 12, the arrangement being such that said plate-shaped carrier is lockable in a plurality of positions relative to the supports 10. The plate-shaped carriers 12 constitute part of a roller assembly 15, which comprises two tubular parts 17, which are arranged freely rotatably by means of shafts 16 provided near the front and rear sides of the plate-shaped carriers 12. The pin 11, about which a plate-shaped carrier 12 is pivotal, is located at least substantially halfway between the shafts 16. The tubular parts 17 extend transversely to the direction of operative travel and parallel to each other. The tubular parts 17, which preferably have a diameter of 20 cms, are spaced apart from each other by a distance which is approximately one third of the radius of a tubular part (Figure 3). Endless belts 18 made of an elastic material, preferably rubber, are arranged about the tubular parts 17 in a manner as shown in Figures 1 and 3. As is apparent from Figure 4, a belt 18 is arranged near each of the ends of a tubular part 17 and further belts 18 are arranged equidistantly interspaced therebetween. The belts 18 extend at least substantially parallel to a vertical plane in the direction of operative travel. The distance between an outermost but one belt 18 and each of the belts 18 at the ends of the tubular part 17 exceeds the interspace between the belts 18 located therebetween. The belts 18 are interconnected by means of rod-shaped, elongate elements 19, which extend over the entire length of the tubular parts 17 and are located at least substantially parallel to the axes of rotation of the tubular parts. The spacing between the respective elongate elements 19 corresponds to a circumferential angle of approximately 60° on the tubular parts. The rod-shaped, elongate elements 19 are passed through the belts 18, a thickened portion 20 being provided in situ. Each belt 18 has a cross-section which at the outer side is substantially square and tapers inwardly (Figure 5). Hereby it is accomplished that it is not easy for earth to stick to the belt 18. The ends of each of the tubular parts 17 are provided with a raised edge 20A, which edge prevents the endless movable element 21 constituted by the belts 18 and the rod-shaped portions 19 from moving too far sidewardly.

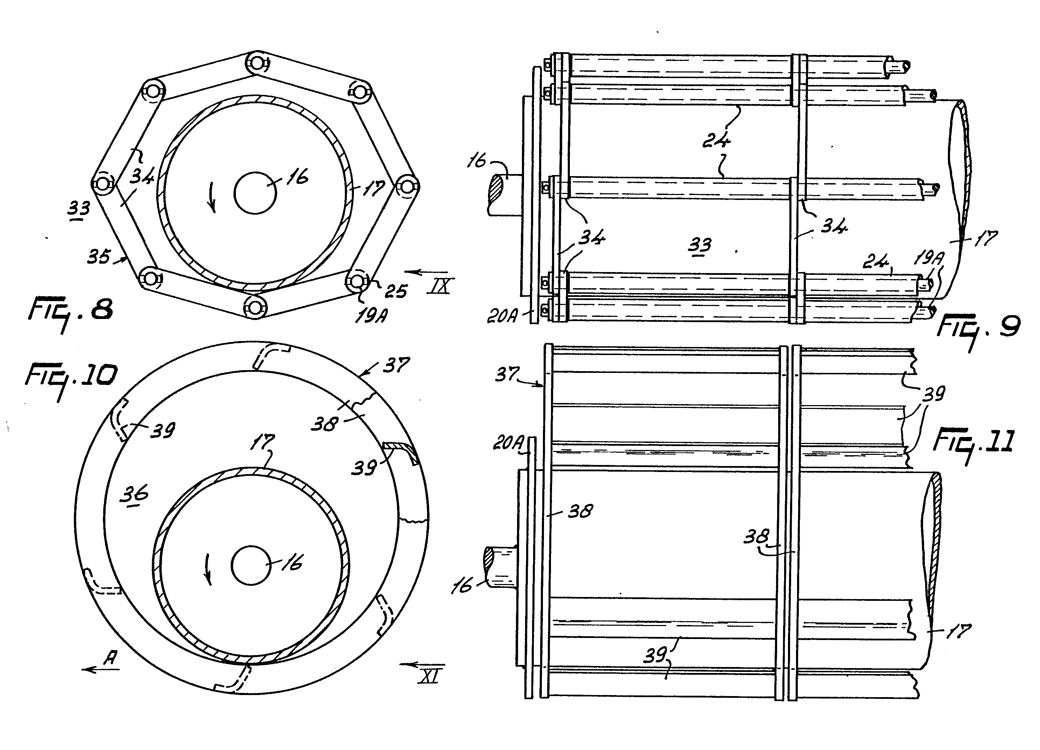

In Figures 6 and 7 a roller assembly 22 is shown, in which the rod-shaped, elongate elements 19A are interspaced by the same distance as the rod-shaped, elongate elements 19 in the preceding embodiment. The roller assembly 22 also includes tubular parts 17 arranged in the same manner. In this embodiment, the elongate elements 19A are interconnected by belts consisting of hinging links 23 which interconnect the consecutive elongate elements 19A and are made of strip material. The widest side of the strip extends at least substantially perpendicularly to the axes of rotation of the tubular parts 17. The elongate elements 19A constitute hinge pins for the respective links 23, said links being provided between consecutive elongate elements in a manner as shown in Figure 7. Between adjacent links 23 spacer bushes 24 are disposed about the elongate elements 19A, while the ends of the elongate elements are provided with a bore, through which a pin is inserted. Each link 23 is curved and has a length corresponding to a circumferential angle of approximately 60° on each of the tubular parts 17, the arrangement being such that the links 23 can fully bear against the wall of a tubular part (Figure 6). The links 23 together with the rod-shaped, elongate elements 19A constitute an endless movable element 26 which is in the form of a flexible wall and is also kept in position by edges 20A.

Inside the box-like frame portion 1, each of the shafts 2 of the soil working members 3 is provided with a pinion 27, the arrangement being such that the pinions 27 on the shafts of adjacent soil working members are in driving connection with each other. Near the centre, the shaft of a soil working member 3 is extended upwardly and by means of the extension reaches into a gear box 28, inside which said extension is connected via a bevel gear wheel transmission and a speed variator 29 arranged at the rear side of the gear box to a shaft 30 which extends in the direction of operative travel A and at the front side projects beyond the gear box. The shaft 30 is connectable to the power take-off shaft of a tractor via an intermediate shaft 31. Near its centre, the top side of the box-like frame portion 1 is provided with a trestle 32 which at its front side has a three-point connection for coupling same to the three-point lifting hitch of a tractor.

The implement described in the foregoing operates as follows:

During operation, the machine can be moved in a direction indicated by the arrow A by means of a tractor to which it is hitched with the aid of the three-point connection of the trestle 32. Hereby the respective soil working members are driven from the power take-off shaft of the tractor via the intermediate shaft 31 and the above-described transmission in directions as indicated by arrows in Figure 1. Hereby, adjacent soil working members 3 rotate in opposite direction, and the soil working elements 5 cultivate at least adjoining strips of soil. Before the machine is put into operation, it is possible to set the working depth of the soil working members 3 by means of the roller assemblies 15 and 22, respectively, using the adjusting device 9 arranged at the rear side of the box-like frame portion. By moving the respective roller assemblies 15 and 22 over the soil, the consecutive tubular parts 17, around which the endless movable element 21 formed by the belts and the rod-shaped elements 19 and 19A, respectively, and the endless movable element 26 in the form of a flexible wall, respectively, is arranged, are rotated in a direction indicated by an arrow in Figure 3. Hereby the respective endless movable elements 21 and 26 move in the same direction. Depending on the type of soil and the circumstances, the tubular parts 17 will then move at varying velocities relative to each other and relative to the endless movable element 21 and 26, respectively, as a result of which, in addition to a proper crumbling and distribution of the crumbled soil, earth is prevented from sticking. A prevention of the earth from sticking is still further enhanced, in the first embodiment, in that the belts 18 interconnecting the elongate elements 19 are made of an elastic material and taper at the sides facing the tubular parts 17.

In the second embodiment, the movability of the respective belts is strongly enhanced in that the curved, strip-shaped links 23 arranged between the elongate elements 19A are freely pivotal relative to each other. By means of the roller assembly 15 and 22, respectively, a high degree of stability can be obtained for the support of the machine, since a relatively large supporting surface is formed, which is in particular of advantage when the machine is combined with a seed drill or planter. With the aid of the relatively large surface area of the above-described roller assembly 15 or 22, an appropriate compacting as well as an intensive additional crumbling of the soil cultivated by the soil working members 3 is obtained during operation. As is apparent from Figure 1, the belts 18 interconnecting the respective elongate elements 19 and 19A are arranged in such a way that, with the exception of the two outermost ones, they are located straight behind the axes of rotation of the respective soil working members 3. As a result thereof, during operation, the earth moved to the rear by the soil working members 3 in a fan-like patter falls substantially between the belts 18 and then comes into contact with the rod-shaped elements, so that a feed-through of this earth between the elongate elements is impeded to the least possible extent. Instead of the solid-rod elongate elements it is alternatively possible to use tubes, which may have a larger diameter without adding to the weight of the whole. Should the pin not have been inserted, it is possible for the roller assemblies 15 and 22, respectively, to pivot about the shafts 11, so as to allow always a maximum degree of contact with the cultivated soil. However, it is alternatively possible to lock the roller assembly with respect to the plate-shaped carriers 12 by means of the pin 14 in the position shown in Figure 1. The respective roller assemblies 15 and 22 can further be locked by means of the pins 14 and one of the holes 13 in a position with a greater or lesser degree of forward or rearward tilt relative to the supports 10. In such a way it is possible to change the area of contact with the soil and also the position of the respective endless movable elements 21 and 26 with respect to the rearwardly moved earth.

The roller assembly 33 shown in the Figures 8 and 9 comprises a single tubular part 17. The single tubular part 17 is arranged freely rotatably by means of shafts 16 provided between the lower ends of the supports 10. Belts constituted by strip-shaped links 34 are provided about the tubular part 17 with some clearance, the hinges between the links, which links are straight in this embodiment, being formed by the rod-shaped, elongate elements 19A, about which spacer bushes 24 are provided between the respective links. The broadest sides of the links 34 extend at least substantially perpendicularly to the axis of rotation of the tubular part 17. Seen in plan, the belts formed by the links 34 are arranged in a similar manner with respect to each other as the belts in the two preceding embodiments. The clearance between the belts formed by the links 34 and the tubular part 17 is approximately equal to the radius of the tubular part. The links 34 together with the elongate elements 19A constitute an endless movable element 35 in the form of a flexible wall which surrounds the tubular part 17 with a relatively large clearance. Hereby there is obtained an intensive relative movement between the tubular part 17 and the said wall, portions of said wall themselves being in continuous movement relative to each other. In addition to effecting an appropriate crumbling and compacting, this effectively prevents a sticking of earth, whilst at the same time an appropriate support for the machine is available. The roller assembly may be of a relatively low weight as compared with conventional packer rollers.

Figures 10 and 11 show an embodiment of a roller assembly 36, in which the said flexible wall provided about the tubular part 17 in the preceding embodiment is replaced by adjacently arranged, movable elements in the form of cage-shaped portions 37. Each cage-shaped portion 37 includes two spaced apart rings 38 which are interconnected by elongate elements 39. The spacing between the elongate elements 39 corresponds to the spacing between the elongate elements 19 and 19A, respectively, of the preceding embodiments. The length of the elongate elements 39 is such that the cage-shaped portions 37 have a width of preferably 50 cms, which substantially corresponds to the diameter of the rings 38, which diameter, as is apparent from Figure 10, is such that it amounts to at least substantially twice the diameter of a tubular part 17. The facing rings 38 of neighbouring cage-shaped portions 37 are located at least substantially straight behind the axes of rotation of the respective soil working members 3. The elongate elements 39 provided between the rings 38 of the cage-shaped portions 37 are made of strip material. The elongate elements 39 include a portion which at the outer side of the rings extends at least substantially tangentially and via a curved portion merges into a portion extending tangentially with respect to the periphery of the tubular part 17 and reaching into the inner side of the rings 38. Relative to the direction of rotation of the cage-shaped portions (see arrow in Figure 10), said latter portion extends obliquely forwardly, whereby a sticking of earth during operation can be prevented in an effective manner. During operation, the tubular part 17 presses the cage-shaped portions 37 against the soil, thus increasing the total area of contact. Hereby also a continuous movement of the cage-shaped portions 37 relative to each other and relative to the smooth tubular part 17 is obtained during operation. Although not shown in further detail, it is alternatively possible to provide a structure in which there is provided one single cage portion having the above-described specific elongate elements and annular portions having the above-described dimension relative to the tubular part 17. The relatively large diameter of the tubular part 17 and the cage-shaped portions 37 provide, during operation, a sufficiently stable support for the machine.

By using strip material for the elongate elements 39, it is possible to obtain a light and yet rigid structure of a cage-shaped portion 37 with a relatively large contact area of the respective elongate elements. The tubular parts 17 have a length of preferably 3 meters.

## Claims

1. A soil cultivating machine having a frame and a roller assembly (15, 22, 33, 36) for cultivating the soil, characterized in that the roller assembly (15, 22, 35, 36) includes a tubular part (17) provided at its periphery with a movable element (21, 26, 35, 37), the said element having a peripheral surface that is larger than the peripheral surface of the tubular part (17).

2. A soil cultivating machine as claimed in claim 1, characterized in that the roller assembly has two tubular parts (17), about which the movable element (21, 26) is provided, said tubular parts being freely rotatable, and the axes of rotation extending at least substantially parallel to each other.

3. A soil cultivating machine as claimed any one of the preceding claims, characterized in that the movable element (21, 26, 35) is in the form of a flexible wall.

4. A soil cultivating machine as claimed in claim 3, characterized in that the said flexible wall comprises a plurality of belts (18, 23, 24) which extend at least substantially parallel to a vertical plane in the direction of operative travel of the machine, the said belts being spaced apart and being interconnected by means of rod-shaped portions (19, 19A).

5. A soil cultivating machine as claimed in claim 4, characterized in that the belts (18) are made of elastic material, and the elongate elements (19) are passed through the material which is provided in situ with a thickened portion.

6. A soil cultivating machine as claimed in claim 5, characterized in that a belt (18) made of elastic material has a cross-section which at the side remote from the periphery of the tubular part (17) is of an angular structure and tapers at the side facing said periphery.

7. A soil cultivating machine as claimed in claim 5 or 6, characterized in that the said belts are constituted by strip-shaped links (23, 24), which are interconnected pivotally by means of the said rod-shaped portions (19, 19A).

8. A soil cultivating machine as claimed in claim 7, characterized in that the links (23, 24) are curved such that these curves correspond at least substantially to the curvature of the periphery of a tubular part (17).

9. A soil cultivating machine as claimed in claim 7 or 8, characterized in that between the said flexible wall and the periphery of a tubular part (17) there is provided a clearance which is at least substantially equal to the radius of the tubular part (17).

10. A soil cultivating machine as claimed in any one of the preceding claims 2 to 9, characterized in that the said tubular parts (17) are arranged for pivoting together about a shaft (11) that extends parallel or substantially parallel to the axes of rotation of the tubular parts (17).

11. A soil cultivating machine as claimed in claim 10, characterized in that the tubular parts (17) are adjustable and lockable in a plurality of positions by a pivotal movement about said shaft (11), the arrangement being such that one tubular part (17) is at a level which is higher or lower, respectively, than the other.

12. A soil cultivating machine as claimed in claim 1, characterized in that about the tubular part (17) there is provided with clearance at least one cage-shaped movable element (37) which includes a plurality of elongate elements (39) substantially made of plate material.

13. A soil cultivating machine as claimed in claim 12, characterized in that the elongate elements (39) are made of plate material and have a portion which extends at least substantially tangentially to the periphery of the tubular part (17) and merges into a portion which extends at least substantially tangentially relative to the periphery of a cage-shaped, movable element (37), the arrangement being such that said latter portion of an elongate element (39) extends forwardly relative to the direction of rotation.

14. A soil cultivating machine as claimed in any one of the preceding claims, characterized in that the roller assembly (15, 22, 33, 36) is arranged behind a plurality of soil working member (3) and that the working depth of the soil working member is adjustable with the aid of said roller assembly.

15. A soil cultivating machine as claimed in claim 14, characterized in that the soil working members (3) are arranged in side-by-side relationship in a row extending transversely to the direction of operative travel and are rotatable about upwardly directed shafts (2), and that the belts (18, 23, 34) are located at least substantially behind the axes of rotation of the soil working members (3).

FIG. 1

FIG. 2

FIG. 3

FIG. 4

FIG. 5

FIG. 6

FIG. 7

FIG.8

34
33
35
16
17
25
19A
IX

FIG.9

16
24
34
33
34
24
19A
20A
17

FIG.10

37
38
39
39
39
17
16
36
A
XI

FIG.11

37
20A
39
38
38
16
39
17

0 257 711

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 316 739 (NORRIS)<br>* Whole document * | 1,2,3 | A 01 B 29/04<br>A 01 B 49/02 |
| X | DE-C- 314 955 (APEL)<br><br>* Whole document * | 1,2,3,<br>10,11 | |
| A | | 4 | |
| X | FR-A- 785 533 (PEULABEUF)<br>* Page 1, lines 45-56; figures 2,3 * | 1,2 | |
| A | DE-B-1 161 067 (Fa J. SEMBDNER)<br>* Whole document * | 12 | |
| A | DE-A-2 912 392 (RABEWERK H. CLAUSING) | 14,15 | **TECHNICAL FIELDS SEARCHED (Int. Cl.4)**<br><br>A 01 B |
| X | GB-A-1 264 674 (VAN DER LELY)<br>* Whole document * | 1,3 | |
| A | US-A-2 050 739 (SIEVER KROPP) | | |
| A | CH-A- 278 845 (SONNAILLON) | | |
| | --- -/- | | |

The present search report has been drawn up for all claims

| Place of search | Date of completion of the search | Examiner |
|---|---|---|
| THE HAGUE | 12-10-1987 | VERDOODT S.J.M. |

European Patent Office

**EUROPEAN SEARCH REPORT**

Application number

EP 87 20 1572

| | DOCUMENTS CONSIDERED TO BE RELEVANT | | Page 2 | |
|---|---|---|---|---|
| Category | Citation of document with indication, where appropriate, of relevant passages | Relevant to claim | CLASSIFICATION OF THE APPLICATION (Int. Cl.4) | |
| X | GB-A- 259 667 (JOHN ALLEN & SONS) * Whole document * | 1,2,3 | | |
| A | | 4,7,10 | | |
| | --- | | | |
| A | DE-C- 715 670 (KOPPISCH) | | | |
| | ----- | | | |
| | | | TECHNICAL FIELDS SEARCHED (Int. Cl.4) | |

' The present search report has been drawn up for all claims

| Place of search | Date of completion of the search | Examiner |
|---|---|---|
| THE HAGUE | 12-10-1987 | VERDOODT S.J.M. |

CATEGORY OF CITED DOCUMENTS

X : particularly relevant if taken alone
Y : particularly relevant if combined with another document of the same category
A : technological background .
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82